# FASCICULE DE BREVET EUROPEEN

(11) **EP 0 394 127 B1**
(45) Date de publication et mention de la délivrance du brevet: **07.12.1994**
(21) Numéro de dépôt: 90401047.7
(22) Date de dépôt: 18.04.1990
(51) Int. Cl.: F16L 5/02, F16L 33/20

(54) **Bague expansible pour la fixation étanche d'une manche de protection dans une ouverture**
Expandierbarer Ring für dichte Befestigung einer Schutzmanschette in einer Öffnung
Expansible ring for tight fastening of a protective hose in an opening

(30) Priorité: 20.04.1989 FR 8905262
(43) Date de publication de la demande: 24.10.1990
(73) Titulaire: SOCIETE D'INNOVATIONS TECHNIQUES, SIT, F-86100 Chatellerault (FR)
(72) Inventeur: Garnier, André, F-86200 Loudun (FR)
(74) Mandataire: Poulin, Gérard

(56) Documents cités:
- GB-A- 1 526 123
- US-A- 2 441 206
- US-A- 4 387 900
- US-A- 4 478 437

## Description

L'invention concerne une bague expansible conçue pour assurer la fixation étanche d'une manche souple de protection dans une ouverture formée dans une paroi.

Dans les cellules de confinement dans lesquelles la manutention s'effectue à distance au moyen de télémanipulateurs, il est de pratique courante de protéger le bras esclave de ces derniers en l'entourant d'une manche souple de protection raccordée de façon étanche à l'extrémité du bras esclave et sur la paroi de la cellule, dans l'ouverture dans laquelle est reçu le bloc de traversée du télémanipulateur. La bague expansible selon l'invention est particulièrement adaptée pour permettre la fixation étanche, de façon interchangeable, d'une telle manche de protection sur la paroi de la cellule de confinement. Cette application ne doit cependant pas être considérée comme limitative, la bague expansible selon l'invention pouvant également être utilisée pour fixer de façon analogue toute manche de protection telle qu'un gant d'une boîte à gants dans une ouverture formée dans une paroi.

Pour assurer la fixation étanche d'une manche souple de protection d'un télémanipulateur dans une ouverture formée dans une paroi, on connaît actuellement deux systèmes différents.

Un premier système consiste à utiliser une bague expansible comportant un anneau ouvert semi-rigide dont les extrémités adjacentes sont reliées par une genouillère, cet anneau étant entouré par un joint annulaire étanche sur lequel peut être monté l'extrémité de la manche.

Ce premier système présente l'avantage d'être particulièrement simple, fiable et peu cher. Cependant, la liaison des extrémités de l'anneau ouvert au moyen d'une genouillère a pour conséquence qu'on ne peut en aucun cas doser l'effort de serrage ou de déserrage du joint, ce qui entraîne lors de la mise en oeuvre d'une telle bague des inconvénients notables. Ainsi, un blocage excessif de la bague peut causer une rupture du mécanisme à genouillère. De plus, dans le cas où, compte tenu des tolérances de fabrication, l'ouverture et le joint ne sont pas rigoureusement à la même cote, le serrage de la bague à l'intérieur de l'ouverture peut être insuffisant et entraîner l'aspiration de la bague par la dépression régnant à l'intérieur de la cellule. Enfin, lors du remplacement de la manche de protection, il est nécessaire d'ouvrir la genouillère pour permettre l'éjection de la bague avant la mise en place d'une autre manche, ce qui entraîne automatiquement une rupture d'étanchéité puisque la bague dont la genouillère a été ouverte est immédiatement aspirée dans la cellule par la dépression.

Un deuxième système connu pour la fixation étanche d'une manche de protection dans une ouverture formée dans une paroi consiste à fixer à demeure sur cette dernière une bague support présentant un profil intérieur complémentaire du profil extérieur d'une bague d'immobilisation rigide sur laquelle est montée l'extrémité de la manche de protection. De façon plus précise, la bague support comporte intérieurement une gorge dans laquelle est emboîtée à force la bague supportant la manche, l'étanchéité étant assurée par un joint à lèvre soudé à l'extrémité de la manche de protection, reçu dans une gorge formée sur la surface extérieure de la bague support et qui est en contact étanche avec la surface intérieure de la bague support. Pour supprimer tout risque d'échappement accidentel, une bague d'immobilisation coopérant avec les deux autres bagues par des mécanismes à baïonnette est en outre prévue.

Ce système de fixation ne présente pas les inconvénients du système précédent, puisqu'il est formé de bagues complémentaires usinées conjointement de façon à ce que tout risque de rupture d'étanchéité soit impossible, même lors des opérations de remplacement de la manche. Cependant, sa structure est particulièrement complexe et coûteuse et il nécessite un aménagement particulier des cellules, qui doivent être équipées intérieurement de bagues supports, et des manches de protection, qui doivent être équipées d'un joint à lèvre à leurs extrémités.

Le document US-A-4 478 437 décrit une bague expansible de fixation étanche d'un manche souple dans une ouverture d'une paroi. cette bague comprend un anneau ouvert, semi-rigide, dont les deux extrémités adjacentes sont aptes à s'emboîter l'une dans l'autre. Un outil de montage et de démontage en forme de ciseau, actionné par un vérin hyudraulique, est conçu pour prendre appui dans des trous formés dans l'anneau, à proximité de ses extrémités, pour en commander l'écartement.

Par ailleurs, le document US-A-2 441 206 décrit un collier de raccordement d'une manche souple sur une pièce tubulaire. Ce collier comprend un anneau ouvert dont les deux extrémités ouvertes portent des bagues alignées. Un boulon traversant ces bagues assure le serrage du collier.

L'invention a précisément pour objet une bague permettant de fixer de façon étanche une manche de protection dans une ouverture formée dans une paroi, dont la conception particulière lui procure les mêmes avantages de simplicité et de faible coût que le premier système connu décrit précédemment, tout en ajoutant à ces avantages une grande fiabilité et la suppression de tout risque de rupture de l'étanchéité en dépit des tolérances de fabrication, même lors du remplacement de la manche.

Selon l'invention, ce résultat est obtenu au moyen d'une bague expansible conforme à la revendication 1.

Dans un mode de réalisation préféré de l'invention, le mécanisme à levier est placé approximativement dans un plan tangent à l'anneau.

De façon plus précise, l'ensemble vis-écrou peut comprendre une vis munie d'une tête de manoeuvre et un écrou, et le mécanisme à levier peut comprendre deux premiers leviers articulés sur les extrémités adjacent es de l'anneau et sur une noix montée librement sur la vis de façon à être en appui sur sa tête de manoeuvre, et deux deuxièmes leviers articulés sur les extrémités adjacent es de l'anneau et sur l'écrou.

Si la manche de protection ne comporte pas de bourrelet d'étanchéité à son extrémité, l'étanchéité est assurée en plaçant un joint annulaire étanche autour de l'anneau et en montant l'extrémité de la manche sur ce joint.

Un mode de réalisation préféré de l'invention va à présent être décrit, à titre d'exemple non limitatif, en se référant aux dessins annexés, dans lesquels :
- la figure 1 est une vue de face, partielle, d'une bague expansible conforme à l'invention, utilisée pour fixer une manche souple de protection d'un télémanipulateur dans une ouverture formée dans une paroi ;
- la figure 2 est une vue selon la flèche F de la figure 1 illustrant à plus grande échelle les moyens de liaison reliant les extrémités adjacentes de l'anneau de la bague expansible de la figure 1 ;
- la figure 3 est une vue en coupe selon la ligne III-III de la figure 2 ; et
- la figure 4 est une vue de côté, en coupe partielle, illustrant de façon schématique le remplacement d'une manche de protection de télémanipulateur fixée au moyen d'une bague expansible conforme à l'invention.

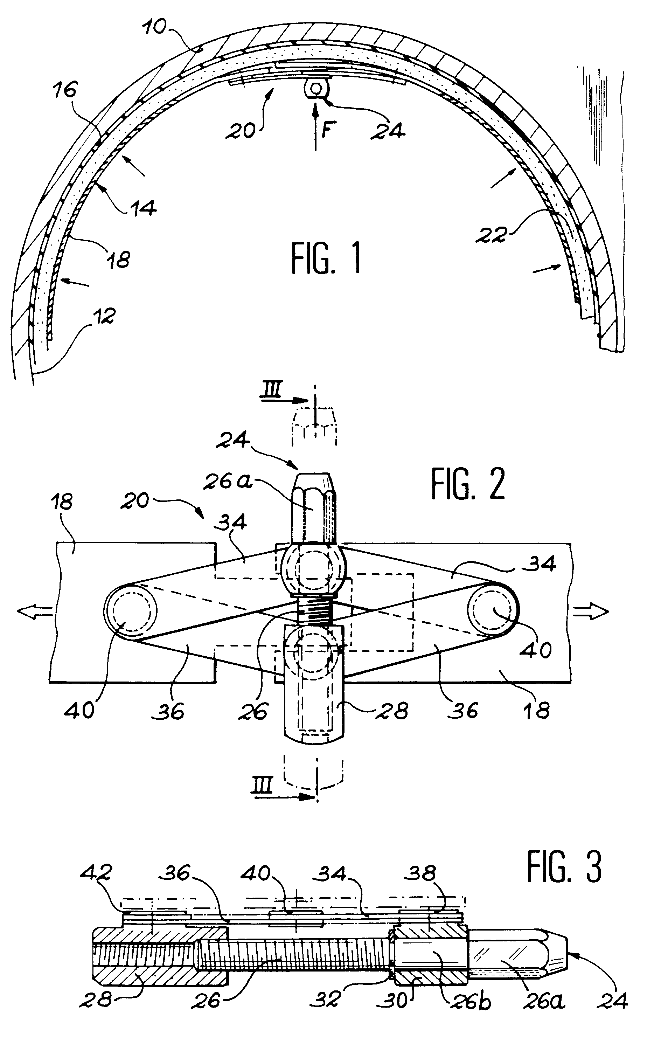

Sur la figure 1, la référence 10 désigne un tube de traversée monté dans une paroi d'une cellule de confinement d'une installation nucléaire, afin de délimiter intérieurement une ouverture circulaire 12 prévue pour recevoir un bloc de traversée d'un télémanipulateur maître-esclave (non représenté).

Conformément à l'invention, une bague expansible désignée de façon générale par la référence 14 sur la figure 1 est placée dans l'ouverture 12, à l'extrémité du tube 10 tournée vers l'intérieur de la cellule de confinement, pour permettre la fixation étanche de l'extrémité d'une manche souple de protection 16 entourant le bras esclave du télémanipulateur.

La bague expansible 14 comprend un anneau ouvert semi-rigide 18, constitué par exemple par une lame d'acier dont les extrémités adjacentes sont reliées par des moyens de liaison désignés de façon générale par la référence 20. La bague expansible 14 comprend de plus un joint annulaire étanche 22 qui est monté autour de l'anneau 18 et sur lequel est emmanchée l'extrémité de la manche 16.

Comme l'illustre plus en détail la figure 2, les extrémités adjacentes de l'anneau 18 présentent de préférence des formes complémentaires du type tenon et mortaise, permettant d'assurer un positionnement latéral relatif entre ces extrémités, tout en autorisant des modifications de leur écartement.

On voit également plus en détail sur les figures 2 et 3 que les moyens de liaison 20 comprennent, conformément à l'invention, des moyens de manoeuvre constitués par un ensemble vis-écrou 24. Les moyens de liaison 20 comprennent de plus un mécanisme à levier par lequel l'ensemble vis-écrou 24 est relié aux extrémités adjacentes de l'anneau 18.

L'ensemble vis-écrou 24 est orienté parallèlement à l'axe de l'anneau 18 et il comprend une vis 26 munie d'une tête de manoeuvre 26a ainsi qu'un écrou 28. Dans sa partie adjacente de la tête de manoeuvre 26a, la vis 26 comprend une partie non filetée 26b (figure 3) sur laquelle peut tourner librement une noix 30. Une rondelle de butée 32 est montée dans une gorge formée sur la vis 26, entre la partie non filetée 26b et la partie filetée, de telle sorte que la noix 30 est emprisonnée entre la tête de manoeuvre 26a et cette rondelle de butée 32.

Le mécanisme à levier reliant l'ensemble vis-écrou 24 aux extrémités adjacentes de l'anneau 18 comprend deux paires de leviers 34 et 36 disposées approximativement dans un plan tangent à l'anneau, tout en tenant compte de la courbure de ce dernier, comme le montre la figure 1.

Les deux premiers leviers 34 comportent deux extrémités adjacentes qui sont articulées par exemple par un rivet 38 sur la noix 30. Les extrémités opposées de ces leviers 34 sont articulées sur les extrémités adjacentes de l'anneau 18, par exemple par des rivets 40.

De façon comparable, les deux deuxièmes leviers 36 sont articulés par deux extrémités adjacentes sur l'écrou 28, par exemple au moyen d'un rivet 42, alors que les extrémités opposées de ces leviers 36 sont articulées sur les extrémités adjacentes de l'anneau 18 par exemple par les rivets 40.

Grâce à l'agencement qui vient d'être décrit, il est possible, en agissant sur la tête de manoeuvre 26a de la vis 26, de faire varier en continu l'écartement entre les extrémités adjacentes de l'anneau 18 entre un état rétracté des moyens de liaison 20, pour lequel l'écartement entre lesdites extrémités adjacentes est minimal, et un état déployé de ces moyens de liaison, pour lequel l'écartement est maximal. Entre ces deux valeurs extrêmes, tous les écartements sont possibles. On comprend que l'effort de serrage et de déserrage du joint 22 peut ainsi être dosé avec soin, ce qui permet de supprimer les inconvénients des bagues expansibles de l'art antérieur comportant un anneau ouvert dont les extrémités adjacentes sont reliées par une genouillère. Cependant, la bague expansible selon l'invention présente une grande simplicité et un coût très bas par comparaison avec les systèmes de fixation à bagues rigides de la technique antérieure.

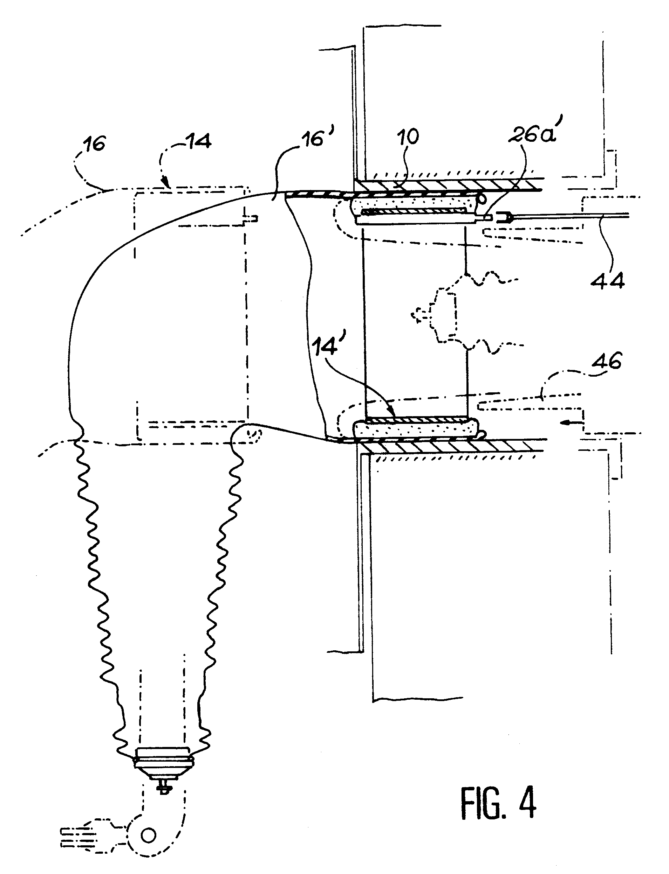

Le remplacement d'une manche souple de protection de télémanipulateur fixée à l'aide d'une bague expansible conforme à l'invention va à présent être décrit en se référant à la figure 4.

Sur cette figure, on reconnaît le tube de traversée 10, la manche souple de protection 16 et la bague expansible 14 selon l'invention. Pour faciliter la compréhension, la longueur et l'épaisseur de cette bague ont été très augmentées par rapport aux dimensions réelles.

Dans un premier temps, à l'aide d'une clé particulièrement simple telle que celle qui est représentée schématiquement en 44, on actionne la tête de manoeuvre 26a de la vis 26 de la bague expansible 14 supportant la manche 16 à remplacer, afin de diminuer légèrement le serrage, sans pour autant rompre l'étanchéité. On introduit ensuite dans le tube de traversée 10 une autre bague expansible 14′ portant une manche neuve 16′. Lorsque cette bague 14′ se trouve immédiatement derrière la bague 14 portant la manche à remplacer, la tête de manoeuvre 26a′ de cette bague 14′ est actionnée à son tour au moyen de la clé 44, afin de réaliser un serrage suffisant pour garantir l'étanchéité, sans empêcher complètement le glissement de la bague à l'intérieur du tube 10 lorsqu'un effort axial est exercé sur la bague expansible.

Au moyen d'un canon 46 illustré en traits mixtes sur la figure 4, on exerce une poussée axiale sur les deux bagues 14 et 14' a lors présentes dans le tube 10, ce qui a pour effet d'éjecter la bague 14 portant la manche à remplacer, comme on l'a représenté en trait mixte sur la figure 4, et de mettre en place la bague 14' portant la nouvelle manche, comme on l'a représenté en trait plein. En actionnant à nouveau la tête de manoeuvre 26a' de la bague 14' au moyen de la clé 44, on complète le serrage de cette bague à l'intérieur du tube de traversée 10, afin que ce serrage soit suffisant pour assurer la fixation étanche désirée, sans pour autant entraîner un risque de rupture des moyens de liaison 20. Le télémanipulateur peut ensuite être utilisé de façon habituelle.

## Revendications

1. Bague expansible de fixation étanche d'une manche souple de protection (16) dans une ouverture formée dans une paroi, cette bague comprenant :
- un anneau ouvert semi-rigide (18) comportant deux extrémités adjacentes, autour duquel est placée ladite manche ;
- des moyens de liaison (20) reliant les extrémités de l'anneau et aptes à occuper un état rétracté d'écartement minimal entre lesdites extrémités et un état déployé d'écartement maximal entre lesdites extrémités ;
caractérisée par le fait que les moyens de liaison (20) comprennent :
- un ensemble vis-écrou (24), orienté parallèlement à l'axe de l'anneau et permettant de faire varier en continu l'écartement entre lesdites extrémités adjacentes, entre ledit état rétracté et ledit état déployé ; et
- un mécanisme à leviers (34, 36) reliant ledit ensemble vis-écrou (24) aux extrémités adjacentes de l'anneau.

2. Bague expansible selon la revendication 1, caractérisée par le fait que le mécanisme à leviers (34, 36) est placé approximativement dans un plan tangent à l'anneau.

3. Bague expansible selon l'une quelconque des revendications 1 et 2, caractérisée par le fait que l'ensemble vis-écrou comprend une vis (26) munie d'une tête de manoeuvre (26a) et un écrou (28), et le mécanisme à leviers comprend deux premiers leviers (34) articulés sur les extrémités adjacentes de l'anneau et sur une noix (30) apte à tourner sur la vis entre une butée (32) et la tête de manoeuvre, et deux deuxièmes leviers (36) articulés sur les extrémités adjacentes de l'anneau et sur l'écrou.

4. Bague expansible selon l'une quelconque des revendications précédentes, caractérisée par le fait qu'elle comprend de plus un joint annulaire étanche (22) entourant ledit anneau (18) et sur lequel est montée ladite manche.

## Claims

1. Expanding collar for the sealed fixing of a flexible protective sleeve (16) in an opening formed in a wall, this collar comprising:
- a semi-rigid open ring (18) having two adjacent ends, around which the said sleeve is placed;
- connecting means (20) connecting the ends of the ring and able to occupy a retracted state of minimum separation between the said ends and a deployed state of maximum separation between the said ends;
characterised in that the said connecting means (20) comprise:
- a nut and screw assembly (24), oriented parallel to the axis of the ring and enabling the separation between the said adjacent ends to be varied continuously, between the said retracted state and the said deployed state; and
- a lever mechanism (34, 36) connecting the said nut and screw assembly (24) to the adjacent ends of the ring.

2. Expanding collar according to Claim 1, characterised in that the lever mechanism (34, 36) is positioned approximately in a plane tangent to the ring.

3. Expanding collar according to either one of Claims 1 and 2, characterised in that the nut and screw assembly comprises a screw (26) with an operating head (26a) and a nut (28), and the lever mechanism comprises two first levers (34) articulated on the adjacent ends of the ring and on an annulus (30) able to rotate on the screw between a stop (32) and the operating head, and two second levers (36) articulated on the adjacent ends of the ring and on the nut.

4. Expanding collar according to any one of the preceding claims, characterised in that it also comprises a sealed annular joint (22) surrounding the said ring (18) and on which the said sleeve is mounted.

## Patentansprüche

1. Expandierbarer Ring zur dichten Befestigung einer biegsamen Schutzhaltestange (16) in einer in einer Wand ausgebildeten Öffnung, wobei dieser Ring umfaßt :
- einen halbfesten offenen Ring (18), der zwei nebeneinanderliegende Enden aufweist und um den herum die Stange angeordnet ist ;
- Verbindungseinrichtungen (20), die die Enden des Ringes verbinden und einen zurückgezogenen minimalen Abztandszustand zwischen den Enden und einen entfalteten maximalen Abstandszustand zwischen den Enden einnehmen können ;
dadurch gekennzeichnet, daß die Verbindungsmittel (20) umfassen :
- eine Schrauben-Mutterkonstruktion (24), die parallel zur Achse des Rings ausgerichtet ist und es ermöglicht, die Beabstandung zwischen den nebeneinanderliegenden Enden zwischen dem zurückgezogenen und dem entfalteten Zustand kontinuierlich variieren zu lassen ; und
- einen Hebelmechanismus (34, 36), der die Schrauben-Mutterkonstruktion (24) mit den nebeneinanderliegenden Enden des Rings verbindet.

2. Expandierbarer Ring nach Anspruch 1, dadurch gekennzeichnet, daß der Hebelmechanismus (34, 36) in etwa in einer tangential zum Ring liegenden Ebene angeordnet ist.

3. Expandierbarer Ring nach einem der Ansprüche 1 und 2, dadurch gekennzeichnet, daß die Schrauben-Mutterkonstruktion eine Schraube (26) umfaßt, die mit einem Manövrierkopf (26a) und einer Mutter (28) versehen ist, und der Hebelmechanismus zwei erste Hebel (34) umfaßt, die auf den nebeneinanderliegenden Enden des Rings und auf einer Nuß (30) angelenkt sind, die in der Lage ist, sich auf der Schraube zwischen einem Anschlag (32) und dem Manöverkopf zu drehen, und zwei zweite Hebel (36), die auf den nebeneinanderliegenden Enden des Rings und auf der Mutter angelenkt sind.

4. Expandierbarer Ring nach einem der vorstehenden Ansprüche, dadurch gekennzeichnet, daß er ferner eine ringförmige dichte Packung (22) umfaßt, die den Ring (18) umgibt und auf der die Stange angebracht ist.
